Europäisches Patentamt

European Patent Office

Office européen des brevets

(11) Numéro de publication: **0 262 274**
**A1**

## (12) DEMANDE DE BREVET EUROPEEN

(21) Numéro de dépôt: **86402071.4**

(22) Date de dépôt: **22.09.86**

(51) Int. Cl.4: **F23J 3/04** , B04C 5/20 , F28D 21/00 , F24H 1/36

(43) Date de publication de la demande:
**06.04.88 Bulletin 88/14**

(84) Etats contractants désignés:
**AT BE CH DE FR GB IT LI LU NL SE**

(71) Demandeur: **Percevaut, Emile**
**6, rue Du Champ Reine**
**F-78720 Senlisse(FR)**

(72) Inventeur: **Percevaut, Emile**
**6, rue Du Champ Reine**
**F-78720 Senlisse(FR)**

(54) **Récupérateur thermique sur fumées de foyers divers avec épuration de ces fumées.**

(57) L'invention concerne un récupérateur de calories associant l'épuration des fumées.

L'invention est constituée d'une enveloppe cylindrique verticale et calorifugée (1) reposant sur des pieds (18) et sur laquelle est suspendu à l'aide de goussets (4) et cornières (6) un récupérateur thermique central (3), vertical et cylindrique, traversé par des tubes à fumées verticaux (7) dépassant légèrement la paroi supérieure (8) du récupérateur central (3).

Un conduit central (9) permet l'évacuation des condensats, du haut de l'appareil vers le bas.

L'échange des calories se fait sur le pourtour du récupérateur central (3) et par les tubes à fumées (7).

Les fumées introduites tangentiellement en partie haute de la chambre (14) délimitée par les deux parois verticales sur le pourtour de l'appareil subissent un dépoussiérage par centrifugation avant de remonter dans les tubes à fumées (7) où elles condensent par refroidissement.

Les résidus tombent dans le bas de l'appareil qui est un cône inversé (11) relié à un réservoir de neutralisant (13) par une canalisation (12).

Chaque élément est amovible.

Fig 1

La présente invention concerne un dispositif permettant de remédier au gaspillage d'énergie et à la pollution atmosphérique.

La pollution de l'atmosphère par l'acidité des fumées est dûe essentiellement à la consommation de combustibles fossiles : hydrocarbures (fuel, charbon et gaz) qui contiennent du soufre.

En effet, la combustion de ce soufre engendre des gaz acides corrosifs et toxiques, notamment l'anhydride sulfurique (SO3) qui se condense lorsque la température des fumées s'abaisse au "point de rosée sulfurique" (environ 160 à 180°C).

Cette condensation forme alors de l'acide sulfurique (H2 SO4) qui se dilue dans l'atmosphère et est véhiculé par les nuages sous forme d'aérosols corrosifs.

Cette pollution cause des dégâts graves sur l'environnement (forêts, sols, immeubles, monuments) ainsi que sur la Santé Publique.

Il est indéniable que cette pollution acide est une des causes essentielles de la dégradation très grave des forêts - Vosges, Allemagne -et de l'acidification des lacs nordiques.

Actuellement la nécessité impérative d'éviter que les chaudières ou autres foyers ne subissent inéluctablement la corrosion sulfurique, impose d'évacuer les fumées à une température maintenue à 200/250°C, afin d'éviter le "point de rosée sulfurique".

Pour les mêmes raisons, la plupart des récupérateurs thermiques rejettent des fumées encore trop chaudes ou bien sont corrodés très rapidement.

En effet, les différents matériels de récupération d'énergie existant actuellement étant réalisés le plus souvent en monoblocs et sensibles à la corrosion et à l'encrassement sont réservés principalement aux combustibles dits "propres", ne contenant pas ou peu de soufre, tel le gaz.

En ce qui concerne les combustibles chargés en soufre, les épurateurs-récupérateurs thermiques connus n'intègrent pas d'une façon satisfaisante et dans un même appareil, les fonctions suivantes :
-taux élevé de récupération thermique, auto-neutralisation des condensats, et interchangeabilité simplifiée des éléments constitutifs.

Le dispositif objet de la présente invention permet d'assumer de façon très poussée les fonctions de récupération des calories jusqu'ici perdues dans les fumées, d'épuration physico-chimique de ces fumées, et d'interchangeabilité de ses divers éléments.

En effet, les caractéristiques de la présente invention sont les suivantes :
-abaisser la température des fumées et récupérer l'énergie thermique pour différentes utilisations (notamment en réintégrant ces calories dans le circuit de production thermique des chaudières classiques en amont).
-réduire la consommation des combustibles fossiles.
-provoquer les condensations acides dans l'appareil, afin de les neutraliser et de protéger tout ce qui est en aval.
-ne pas déplacer la pollution de l'air vers les sols d'où l'obligation d'une neutralisation des condensats acides qui soit fiable et automatisée.
-fonctionner en atmosphère corrosive, donc être conçu en éléments interchangeables, afin de remédier à faible coût à un manque de neutralisation.
-protéger les surfaces d'échange du récupérateur contre l'encrassement (suies, particules solides).

Le dispositif objet de la présente invention est constitué par une première enveloppe extérieure cylindrique verticale et calorifugée, comportant en sa partie haute une ouverture tangentielle pour l'admission des fumées provenant d'un générateur thermique.

A l'intérieur de cette première enveloppe, se trouve le récupérateur-thermique proprement dit qui est constitué par un ensemble cylindrique logé à l'intérieur de l'enveloppe précitée, et en partie haute.

Ce récupérateur est situé au centre de l'appareil et laisse un passage suffisant aux fumées sur le pourtour et dans le bas de l'appareil.

Des tubes à fumées sont logés verticalement à l'intérieur de cet échangeur cylindrique central.

Selon une variante, les tubes à fumées sont munis de serpentins spiraloïdes amovibles destinés à prolonger le temps de contact des fumées sur les parois d'échange thermique.

Le sommet et la base de l'échangeur thermique central sont en forme de cônes inversés percés pour le passage des tubes à fumées verticaux, l'eau circulant dans l'échangeur, autour de ces tubes.

Selon une variante, le sommet et la base de l'échangeur thermique central peuvent avoir une forme arrondie.

A l'intérieur de l'appareil les fumées décrivent un parcours spiraloïde descendant dans l'espace annulaire périphérique, ce qui engendre un dépoussiérage par centrifugation.

Les fumées ainsi centrifugées décrivent ensuite un mouvement giratoire et de retournement du bas vers le haut, qui accentue le dépoussiérage des fumées, puis remontent par les tubes à fumées avant d'être évacuées au sommet de l'appareil.

Selon une variante, l'espace annulaire périphérique est aménagé d'éléments déflecteurs ou de multi-turbulences ou d'une spirale amovibles, accentuant le dépoussiérage des fumées par centrifugation.

Selon une autre variante, l'admission des fumées est pourvue d'un système permettant une injection d'un neutralisant en poudre dans les fumées.

Le fond de l'appareil est également en forme de cône inversé (ou toute autre forme qui aura été retenue pour l'élément interne d'échange thermique), ouvert en sa partie centrale pour permettre l'évacuation des suies et condensats, et muni en son centre d'un contre-cône plus petit, ayant pour effet de recanaliser les fumées vers la base des tubes à fumées.

L'échangeur central comporte en son axe un tube vertical qui le traverse de haut en bas ; ce tube est destiné à l'évacuation des condensats et est soudé arasé sur la paroi supérieure et prolongé en sa partie basse de l'échangeur, pour pénétrer dans le contre-cône percé, ce qui a pour effet d'éviter le réchauffage et l'évaporation des condensats au contact des fumées non encore refroidies.

Selon une variante, ce tube est calorifugé.

La jonction par soudure des tubes à fumées sur la paroi supérieure de l'échangeur interne, a cette particularité que les tubes ne sont pas soudés d'une façon arasée, mais dépassent cette paroi d'une certaine hauteur, afin d'éviter que les condensats provenant de la zone de basses températures, située au dessus de cette paroi, ne s'écoulent par les tubes à fumées, mais par le tube axial prévu à cet effet.

A la sortie des tubes à fumées, un tronc de cône raccordé au conduit d'évacuation des fumées ferme la partie supérieure.

L'élément de récupération thermique interne n'est pas soudé sur l'enveloppe externe porteuse, mais seulement suspendu dans l'appareil au moyen de goussets percés de trous pour le passage éventuel de crochets ou manilles, et reposant sur la paroi extérieure porteuse du récupérateur.

Des panneaux ajustés et bloqués ferment le haut de l'appareil entre la paroi verticale calorifugée externe qui est porteuse, et l'échangeur thermique central qui est amovible.

Une porte percée dans la paroi calorifugée extérieure permet, après avoir débranché les canalisations d'aller et retour d'eau qui sont raccordées sur la chaudière de production thermique, et démonté le haut de l'appareil, un échange standard du bloc "récupération thermique" central, par déboitage à l'aide de manilles ou crochets passés dans les trous des goussets-supports avant coulissage latéral à l'aide par exemple d'un palan sur monorail.

Selon une variante, le bloc échangeur central pivote sur des charnières, pouvant être disposées sur l'enveloppe porteuse, pour se coucher à l'horizontale où il est réceptionné par un chariot ou tout autre support permettant un échange standard plus aisé.

Selon une autre variante, la paroi extérieure n'est pas percée de portes, l'échange standard du récupérateur thermique central s'effectuant par levée verticale à l'aide de crochets placés dans les trous des "goussets-supports".

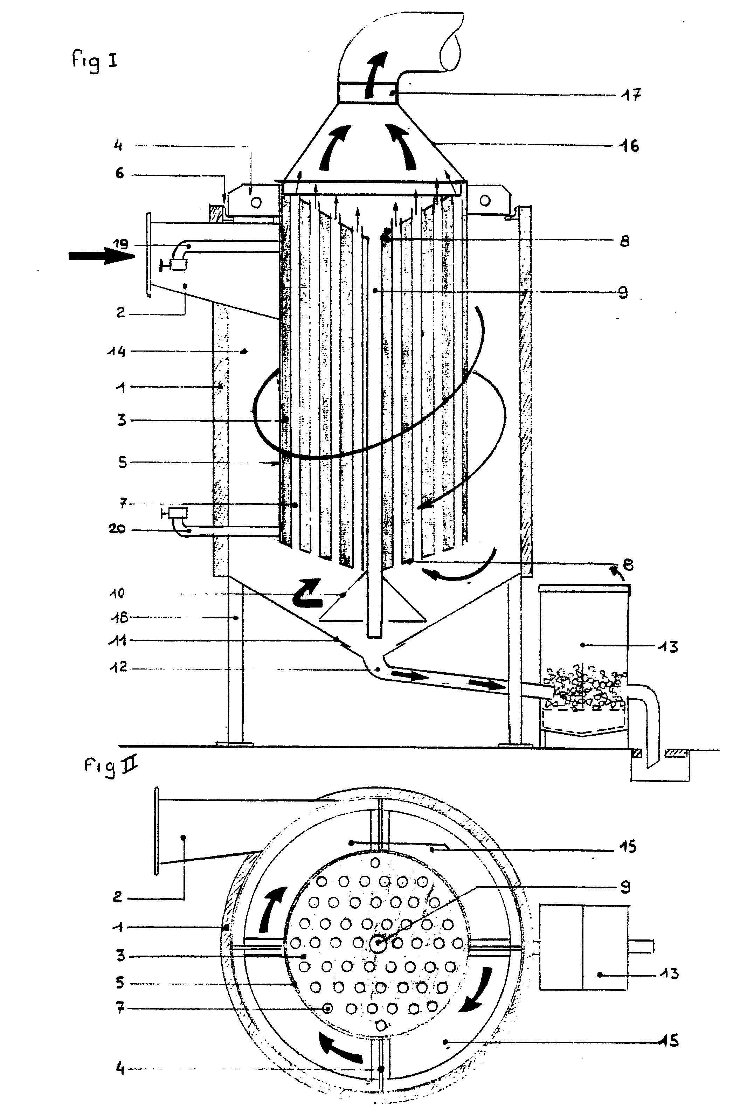

Les suies et condensats qui sont récupérés tout au fond de l'appareil s'écoulent par une canalisation vers un bac de neutralisation, tel qu'indiqué sur figure N° 1.

Selon une variante, les suies et condensats tombent dans un tiroir mobile relié à un distributeur de neutralisant.

Selon une variante, le même dispositif que ci-dessus décrit est alimenté, non plus par des fumées de combustion, mais par la flamme d'un brûleur à fuel ou gaz, ou toute autre source calorifique.

La figure 1 représente une coupe verticale de l'invention.

La figure 2 représente une coupe horizontale.

La figure 3 est un détail du système de suspension de l'échangeur thermique central.

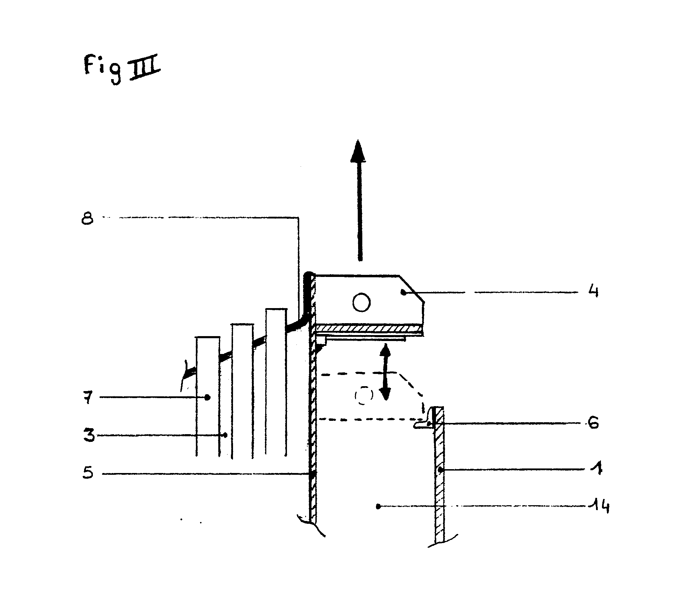

L'appareil selon les figures 1, 2 et 3 est constitué d'une enveloppe externe cylindrique porteuse et calorifugée (1), comportant en sa partie haute une ouverture tangentielle (2) pour l'admission des fumées.

L'échangeur thermique central (3) est suspendu à l'aide de goussets (4), fixés sur la paroi extérieure (5) de cet échangeur central (3) et reposant sur une bride cornière (6) soudée sur l'enveloppe cylindrique externe (1).

Des tubes à fumées verticaux (7) traversent l'échangeur thermique central (3).

Les parois hautes et basses (8) de l'échangeur central (3) sont en forme de cônes inversés percés de trous pour le passage des tubes à fumées (7) qui sont soudés d'une façon étanche sur ces deux parois.

L'échangeur central (3) comporte en son axe un tube (9) soudé arasé sur la paroi supérieure cônique (8) par lequel s'écoulent les condensats recueillis sur la paroi inclinée (8).

Ce tube axial (9) descend jusque dans le fond de l'appareil afin de ne pas mêler les condensats recueillis avec les fumées chaudes.

Un tronc de cône (10) se trouve placé autour de la partie basse du tube axial (9), ayant pour effet de faire converger les fumées, pour les faire monter dans les tubes à fumées (7), et en outre, d'isoler thermiquement les condensats recueillis, de la chaleur des fumées en cette partie basse de l'appareil.

Les tubes à fumées (7) dépassent en hauteur de la paroi supérieure de l'échangeur (8) afin que les condensats ne s'écoulent pas par l'intérieur de ces tubes à fumées (7).

Le fond (11) de l'appareil forme également un cône inversé. Sous ce cône inversé (11) est disposé un entonnoir amovible qui se continue par une canalisation (12) permettant l'écoulement des condensats et suies vers un bac de neutralisation comportant une réserve de modules neutralisants (13) permettant l'auto-neutralisation des condensats, avant leur rejet à l'égout, conformément aux normes de non pollution des eaux et des sols.

A l'intérieur de l'appareil, les fumées décrivent un premier parcours spiraloïde descendant dans le couloir (14) aménagé entre la paroi calorifuge externe (1) de l'appareil, et la paroi externe de l'échangeur central (3), puis remontent à travers les tubes à fumées (7) dans la partie haute de l'appareil, avant rejet dans l'atmosphère.

Le haut de l'appareil, dans la zone périphérique correspondant à l'admission des fumées, est fermé par une couronne fractionnée (15), chaque portion étant située entre les goussets-supports (4).

Au dessus de l'échangeur central est disposé un tronc de cône (16) avec emboitement interne se raccordant au conduit d'évacuation (17) de la cheminée.

L'ensemble de l'appareil repose sur des pieds (18).

Le transfert des calories récupérées sur les fumées du générateur thermique (chaudière, incinérateur, ou autre foyer) s'effectue par des raccordements quelconques.

A titre d'exemple non limitatif, le départ d'eau chaude s'effectue par la canalisation (19) raccordée en partie haute du récupérateur central, tandis que le retour d'eau à réchauffer s'effectue par la canalisation (20) immergée à la base du récupérateur.

## Revendications

1) Echangeur thermique avec épuration des fumées, composé d'un récupérateur de calories central (3) vertical et cylindrique relié au circuit d'eau du chauffage et disposé dans une chambre cylindrique et calorifugée (1) de plus grand diamètre, reposant sur des pieds (18) où les fumées sont admises tangentiellement en partie haute (2) et subissent un dépoussiérage par centrifugation, avant de pénétrer par le bas, dans les tubes à fumées verticaux (7) où les condensats se déposent avant évacuation des fumées vers le conduit de cheminée (17).

2) Echangeur thermique avec épuration des fumées, selon la revendication 1, caractérisé en ce que les suies et condensats recueillis dans le bas de l'appareil sont évacués par une canalisation (12) vers un bas de neutralisation ou un réservoir contenant des substances neutralisantes (13), avant rejet à l'égout.

3) Echangeur thermique avec épuration des fumées, selon les revendications 1 et 2 caractérisé en ce qu'une injection de neutralisant peut avoir lieu à l'admission des fumées dans l'appareil.

4) Echangeur thermique avec épuration des fumées, selon les revendications 1, 2 et 3 caractérisé en ce que le récupérateur thermique central (3) comporte des goussets-supports (4) percés d'un trou pour le passage de manilles ou crochets et reposant sur des cornières soudées (6) sur l'enveloppe calorifugée externe (1) de l'appareil.

5) Echangeur thermique avec épuration des fumées, selon les revendications 1, 2, 3 et 4 caractérisé en ce que les goussets-supports (4) percés d'un trou pour fixer les crochets ou manilles permettent après démontage des éléments du haut de l'appareil, débranchement des départ et retour d'eau, et vidange de l'eau, de soulever le récupérateur thermique central (3), pour échange standard, à l'aide d'un treuil ou palan sur monorail.

6) Echangeur thermique avec épuration des fumées, selon les revendications 1, 2, 3 et 4 caractérisé en ce qu'un panneau amovible s'ouvre dans la paroi verticale calorifugée extérieure (1) permettant l'échange standard du bloc de récupération interne (3) par ce panneau, après démontage du haut de l'appareil, vindange, débranchement des tuyauteries, déboitage des goussets-supports (4) à l'aide de crochets ou manilles fixées dans les trous prévus à cet effet, et coulissage sur monorail ou autre.

7) Echangeur thermique avec épuration des fumées, selon les revendications 1, 2, 3, 4 et 6 caractérisé en ce que les charnières situées au bas du récupérateur thermique central (3) permettent après ouverture du panneau, vidange et toutes manoeuvres précédemment décrites, de la faire pivoter à l'horizontale pour les manoeuvres d'échange standard.

8) Echangeur thermique avec épuration des fumées, selon les revendications 1 à 7 caractérisé en ce que le fond (11) de l'appareil est en forme de cône inversé percé au centre pour l'évacuation des condensats et suies.

Le fond et la paroi supérieure (8) du récupérateur thermique central (3) forme également un cône inversé.

Le haut de l'appareil est fermé sur le pourtour par une couronne circulaire fragmentée et amovible dont les portions reposent sur des cornières (6) entre chaque goussets-supports (4) obturant ainsi le haut du couloir d'admission des fumées (14), un tronc de cône (16) raccordé au conduit d'évacuation des fumées (17) ferme la partie située au dessus du récupérateur thermique central (3).

9) Echangeur thermique avec épuration des fumées, selon les revendications 1 à 8, caractérisé en ce que les cônes inversés (8) et (11) sont remplacés par des parois creuses arrondies (fonds emboutis).

10) Echangeur thermique avec épuration des fumées, selon les revendications 1 à 9, caractérisé en ce que le corps du récupérateur thermique central (3) est constitué de tubes à fumées verticaux (7) entourés du liquide caloporteur, et dépassant légèrement le haut de la paroi supérieure tronconique inversée (8) (ou arrondie), afin que les condensats qui glissent sur cette paroi (8) ne s'introduisent pas dans les tubes à fumées (7).

11) Echangeur thermique avec épuration des fumées, selon les revendications 1 à 10 caractérisé en ce que les tubes à fumées verticaux (7) sont munis de serpentins spiraloïdes destinés à prolonger le temps de contact des fumées avec les parois d'échange des tubes.

12) Echangeur thermique avec épuration des fumées, selon les revendications 1 à 11, caractérisé en ce que le bloc récupérateur thermique central (3) est muni d'un tube central vertical (9), de préférence calorifugé, soudé au ras de la partie supérieure (8) du récupérateur thermique (3) et dépassant vers le bas de la paroi inférieure (8).

Ce tube central (9) est destiné à recueillir les condensats qui se forment en partie haute de l'appareil ou qui proviennent de la cheminée d'évacuation finale, et qui glissent entre les tubes à fumées (7) sur la paroi cônique inversée ou arrondie (8) du bloc récupérateur thermique (3).

13) Echangeur thermique avec épuration des fumées, selon les revendications 1 à 12 caractérisé en ce que un tronc de cône (10) est disposé autour du tube central d'évacuation des condensats (9), dans le bas de l'appareil, afin de faire converger les fumées vers la base des tubes à fumées (7).

14) Echangeur thermique avec épuration des fumées, selon les revendications 1 à 13 caractérisé en ce que le couloir périphérique (14) situé entre les deux enveloppes cylindriques verticales (1) et (5), est aménagé d'éléments déflecteurs, de multi-turbulences ou d'un couloir en spirale amovible.

15) Echangeur thermique avec épuration des fumées, selon les revendicatios 1 à 14 caractérisé en ce que l'adjonction d'un brûleur à fuel ou à gaz situé à la place de l'admission des fumées transforme le système précédemment décrit en unité de production thermique.

# 0 262 274

Fig I

Fig II

fig III

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 145 808 (TÜZELESTECHNIKAI KUTATO- ES FEJLESZTÖ) * Page 3, lignes 19-24,36,37; page 4, lignes 1-38; page 5, lignes 1-38; figures 1,2 * | 1 | F 23 J    3/04 B 04 C    5/20 F 28 D   21/00 F 24 H    1/36 |
| | --- | | |
| A | CH-A-  242 089  (VON ROLL) * Page 2, lignes 35-96; figures 1-4 * | 1 | |
| | --- | | |
| A | EP-A-0 096 823  (DEUTSCHE FORSCHUNGS- UND VERSUCHSANSTALT FÜR LUFT- UND RAUMFAHRT e.V.) * Page 4, ligne 22 - page 6, ligne 22; figures * | 1 | |
| | --- | | DOMAINES TECHNIQUES RECHERCHES (Int. Cl.4) |
| A | DE-A-3 148 023  (FISCHER) * Page 8, ligne 1 - page 9, ligne 12; figures 1-3 * | 1 | F 23 J F 28 D F 24 H |
| | --- | | |
| A | DE-A-3 517 990  (TONA) * Page 4, dernier paragraphe; page 5, premier paragraphe; figure 1 * | 2 | B 04 C |
| | --- | | |
| A | DE-A-3 347 268  (BUDERUS) * Revendication 1 * | 3 | |
| | ---                   -/- | | |

Le présent rapport de recherche a été établi pour toutes les revendications

| Lieu de la recherche LA HAYE | Date d'achèvement de la recherche 18-05-1987 | Examinateur PHOA Y.E. |
|---|---|---|

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 501 832 (PERCEVAUT)<br>* Page 3, lignes 12-14,24-27; page 7, lignes 17-32; figures 1-3 * | 6 | |
| A | US-A-4 542 734 (TRENT)<br>* Colonne 4, lignes 46-53,59-62; colonne 5, lignes 5-11; figures 5,6 * | 11 | |
| A | GB-A- 183 160 (DAVIES)<br>* Page 3, lignes 5-18; figures 1,2 * | 14 | |

DOMAINES TECHNIQUES
RECHERCHES (Int. Cl.4)

Le présent rapport de recherche a été établi pour toutes les revendications

| Lieu de la recherche<br>LA HAYE | Date d'achèvement de la recherche<br>18-05-1987 | Examinateur<br>PHOA Y.E. |
|---|---|---|

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

OEB Form 1503 03 82